# EUROPÄISCHE PATENTSCHRIFT

(11) **EP 2 121 212 B1**
(45) Veröffentlichungstag und Bekanntmachung des Hinweises auf die Patenterteilung: **31.08.2011**
(21) Anmeldenummer: 07726256.6
(22) Anmeldetag: 29.01.2007
(51) Int. Cl.: B21F 35/02, F16F 3/06

(54) **ZWEI ODER MEHRLAGIGE DRUCKFEDER**
TWO-LAYER OR MULTIPLE-LAYER COMPRESSION SPRING
RESSORT DE COMPRESSION À DEUX OU PLUS DE DEUX COUCHES

(43) Veröffentlichungstag der Anmeldung: 25.11.2009
(73) Patentinhaber: Baumann Federn AG, 8630 Rüti (CH)
(72) Erfinder: HOHL, Andreas, CH-8630 Rüti (CH); NOTENBOOM, Hans, CH-8640 Rapperswil (CH)
(74) Vertreter: Troesch Scheidegger Werner AG
(86) Internationale Anmeldenummer: PCT/EP2007/050839
(87) Internationale Veröffentlichungsnummer: WO 2008/092502

(56) Entgegenhaltungen:
- DE-A1- 10 222 778
- US-A- 4 148 469
- US-A- 5 875 664

## Beschreibung

Die vorliegende Erfindung betrifft eine zwei- oder mehrlagige Druckfeder, deren zylindrische Federkörper ineinander liegend angeordnet sind. Eine solche Druckfeder ist aus der DE-A-10222778 bekannt.

Energie muss häufig über längere Zeit gespeichert werden, darf über die Zeit nicht verloren gehen und muss zu einem bestimmten Zeitpunkt gezielt abgegeben werden können.

Dafür werden häufig Druckluft-, Hydraulik- oder Federspeicher eingesetzt. Federspeicher haben den Vorteil, dass sie einfach gebaut und, bei richtiger Dimensionierung, keinen oder einen nur sehr geringen Kraft- bzw. Energieverlust aufweisen. Dieser Energieverlust kann weiter reduziert werden durch eine entsprechende Dimensionierung der Feder mit entsprechend mässiger Belastung unterhalb der Kriechgrenze des Materials. Eine niedrige Ausnutzung der Belastbarkeit des Materials führt allerdings zu grösserem notwendigem Bauvolumen.

Ein weiterer Aspekt eines Energiespeichers, insbesondere eines Federspeichers, ist der Verlauf der Federkraft über den Entspannungsweg der Feder:
Kompakte Federspeicher mit hoher Anfangskraft weisen häufig eine hohe Federrate auf mit einer hohen Anfangskraft und einer tiefen Endkraft. Wegen der hohen Anfangskraft müssen die kraftaufnehmenden Bauteile unverhältnismässig stark dimensioniert sein damit die Endkraft das notwendige Mass noch erreicht. Auch kann bei zu schlechtem Verhältnis der Anfangskraft zu Endkraft die Funktion des Kraft aufnehmenden Bauteils beeinträchtigt sein. Die Erfüllung der Anforderungen nach einer flachen Federkennlinie führt zu einem grösseren notwendigen Bauvolumen für den Federspeicher.

Die Forderung nach mehr Energiespeicherung pro Volumen wurde beispielsweise dadurch gelöst, dass zwei oder mehr Federn mit unterschiedlichem Durchmesser ineinander geschoben werden und so den vorhandenen Bauraum besser nutzen.

Je nach Anforderungen müssen diese Federn gegeneinander festgehalten werden. Dies erfolgt mit verschiedenen Methoden, zum Beispiel mittels einer Hülse welche zwischen die Federn geschoben wird oder mittels Federteller welcher auf die Federenden geschoben und gesichert werden. Hülsen oder Federteller sollen verhindern, dass die Federn aneinander reiben oder gar ineinander verhaken. Abgesehen davon, dass mit diesen Lösungsversuchen ein Aufwand bezüglich Montage entsteht, ist das Resultat nicht immer befriedigend.

Aufgabe der Erfindung ist es, die Anforderungen optimaler zu erfüllen und die Nachteile der bekannten Lösungen zu eliminieren oder zumindest zu reduzieren.

Die gestellte Aufgabe wird mit einer Druckfeder der eingangs definierten Art erfindungsgemäss durch das Merkmal des kennzeichnenden Teils von Anspruch 1 gelöst.

Besonders vorteilhafte Ausführungsformen des Erfindungsgegenstandes sind in den abhängigen Ansprüchen definiert.

Die Erfindung wird nachstehend anhand von in der Zeichnung dargestellten Ausführungsbeispielen noch etwas näher erläutert. Es zeigt:
- Fig. 1: eine erfindungsgemässe Druckfeder aus zwei ineinander liegenden Federkörpern, welche aus einem einzigen, d.h. unterbruchslosen Stück Draht bestehen, und
- Fig. 2: eine ähnliche Druckfeder wie Fig. 1, bei welcher jedoch in der Mitte der Federlänge und an den Federenden dicht aneinander anliegende Windungen vorgesehen sind.

Die in der Zeichnung gezeigte Druckfeder weist zwei ineinander liegende Federkörper 1, 2 aus Federstahl auf, welche unterschiedliche Durchmesser aufweisen aber aus einem einzigen, d.h. unterbruchslosen Stück Draht gebildet sind. Der Übergang vom Federkörper 1 mit dem grösseren Durchmesser auf den Federkörper 2 mit dem kleineren Durchmesser, d.h. die Verbindung zwischen den beiden Federkörpern, erfolgt an einem Federende. Die Herstellung einer solchen mehrlagigen Feder ist dem Fachmann bekannt.

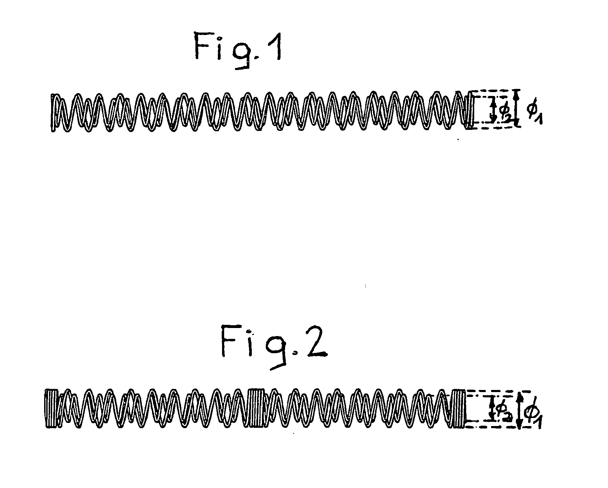

Fig. 2 zeigt eine Ausführungsform einer zweilagigen Feder, deren beide Federkörper 1, 2 gegenläufige Steigung aufweisen (wie vorzugsweise auch die Feder nach Fig. 1), was das Ineinandergehen der einzelnen Federkörper minimiert, und welche an mehreren Stellen aneinander anliegende Windungen aufweist, was die gegenseitige Reibung zwischen den Federkörpern und damit ein Rattern beim Einfedern oder gar das Risiko eines gegenseitigen Verhängens reduziert.

Mit der erfindungsgemäss sehr einfach aufgebauten Feder werden die wesentlichen Nachteile bekannter Lösungen vermieden.

## Patentansprüche

1. Zwei- oder mehrlagige Druckfeder, deren zylindrische Federkörper (1,2) ineinander liegend angeordnet sind, **dadurch gekennzeichnet, dass** die Federkörper zusammenhängend aus einem unterbruchslosen Stück Draht bestehen.

2. Druckfeder nach Anspruch 1, **dadurch gekennzeichnet, dass** die ineinander liegenden, zusammenhängenden Federkörper (1,2) jeweils gegenläufige Steigung aufweisen.

3. Druckfeder nach Anspruch 1 oder 2, **dadurch gekennzeichnet, dass** jeder Federkörper (1,2) an einer oder mehreren Stellen innerhalb seiner Länge und/oder an wenigstens einem seiner Enden mit anliegenden Windungen ausgestaltet ist.

4. Druckfeder nach einem der Ansprüche 1 bis 3, **dadurch gekennzeichnet, dass** der die Federkörper (1,2) bildende Draht einen beliebigen Querschnitt aufweist.

## Claims

1. Two- or multiple-layer compression spring, whose cylindrical spring bodies (1, 2) are arranged one inside the other, **characterised in that** the spring bodies (1, 2) consist of a contiguous, uninterrupted piece of wire.

2. Compression spring according to claim 1, **characterised in that** the contiguous spring bodies (1, 2) arranged one inside the other each feature an opposite inclination.

3. Compression spring according to claim 1 or 2, **characterised in that** each spring body (1, 2), at one or several locations along its length and/or at least at one of its ends, features abutting windings.

4. Compression spring according to one of the claims 1 to 3, **characterised in that** the wire forming the spring bodies features an arbitrary cross-section.

## Revendications

1. Ressort de compression à deux ou à multiple couches, dont les corps de ressort cylindriques (1, 2) sont arrangés se situant l'un dans l'autre, **caractérisé en ce que** les corps de ressort consistent de manière cohérente d'un seul fil sans interruption.

2. Ressort de compression selon la revendication 1, **caractérisé en ce** les corps de ressort (1, 2) cohérents d'un seul fil sans interruption respectifs comprennent des ascendantes contraires.

3. Ressort de compression selon la revendication 1 ou 2, **caractérisé en ce que** chaque corps de ressort (1, 2) est assorti avec des tours tangents à un ou plusieurs lieux dans sa longueur et/ou au moins à un de ses bouts.

4. Ressort de compression selon une des revendications 1 à 3, **caractérisé en ce que** le fil formant les corps de ressort (1, 2) comprend une section transversale quelconque.
